# EUROPEAN PATENT APPLICATION

(11) **EP 1 143 267 A2**
(43) Date of publication of application: **10.10.2001**
(21) Application number: 01107665.0
(22) Date of filing: 28.03.2001
(51) Int. Cl.: G01V 8/12

(54) **Glue bead detection system**

(30) Priority: 04.04.2000 US 542776
(71) Applicant: ILLINOIS TOOL WORKS INC., Glenview, Cook County, Illinois 60025 (US)
(72) Inventor: Bolger, Richard P., Schaumburg, Illinois 60173 (US)
(74) Representative: Patentanwälte Ostriga & Sonnet

(57) **Abstract**

A glue bead detection system having a detector (30), preferably an electro-optic device, positioned adjacent an article (20) having a detectable object (12) for example a heated glue bead thereon, a lens (40) disposed between the article (20) and the detector (30), and a light source (52,54) producing visible light having a focal point directed toward the object (12), wherein radiant energy from the object (12) is focused onto the detector (30) when the focal point of visible light is positioned on the object (12).

## Description

### BACKGROUND OF THE INVENTION

The invention relates generally to detection and alignment systems, and more particularly to electro-optic detector systems.

In many applications it is desirable to detect the presence of some object, for example heated glue beads deposited onto packaging articles. Existing detection systems however are relatively costly and do not have sufficient depth of focus to compensate for variations that occur, in some applications, in the distance between the object to be detected and the detector. In the exemplary glue bead detecting application, the glue bead is deposited onto the surface of a moving substrate, which moves slightly toward and away from the detector as the substrate moves along.

An object of the present invention is to provide novel detection systems and alignment apparatuses therefor that are economical and that improve upon and overcome problems in the prior art.

Another object of the invention is to provide novel detection systems having a relatively great depth of focus.

A further object of the invention is to provide novel detection systems that utilize visible light to focus a target area to be detected onto a detector.

Another object of the invention is to provide novel detection systems that are responsive to detectable changes occurring over relatively short time intervals, for example temperature changes associated with discrete beads of hot meld adhesive moving relatively rapidly past a detector.

A more particular object ofthe invention is to provide novel glue bead detecting systems comprising an electro-optic detector disposed adjacent an article having heated glue beads deposited thereon, a lens disposed and focused between the heated glue beads and the electro-optic detector, whereby the lens directs radiant energy from the heated glue beads onto the electro-optic detector.

Another more particular object of the invention is to provide novel detection systems generally comprising a detector positioned adjacent a target area to be detected, a lens between the target area and the detector, a light source producing visible light having a focal point directed toward the target area, whereby the lens focuses radiant energy from the target area onto the detector when the focal point of the visible light is positioned on the target area.

Another more particular object of the invention is to provide, in a system that dispenses discrete portions of hot melt adhesive onto a moving article, a novel improvement comprising an electro-optic detector positioned proximate the moving article, a light source producing visible light having a focal point directed toward and positionable on the discrete portions of hot melt adhesive, a lens focusing radiant energy from the discrete portions of hot melt adhesive onto the detector when the focal point of the visible light is focused on the discrete portions of hot melt adhesive, whereby radiant energy from the hot melt adhesive is detectable by the electro-optic detector.

These and other objects, aspects, features and advantages of the present invention will become more fully apparent upon careful consideration of the following Detailed Description of the Invention and the accompanying Drawings, which may be disproportionate for ease of understanding, wherein like structure and steps are referenced generally by corresponding numerals and indicators.

### BRIEF DESCRIPTION OF THE DRAWINGS

FIG. 1 is a schematic side view of a glue detection system.
FIG. 2 is a schematic end view of a glue detection system.
FIG. 3 is an exemplary detection system.
FIG. 4 is an alternative detection system.
FIG. 5 is an end view of a lens of FIG. 4.
FIG. 6 is another alternative detection system.

### DETAILED DESCRIPTION OF THE INVENTION

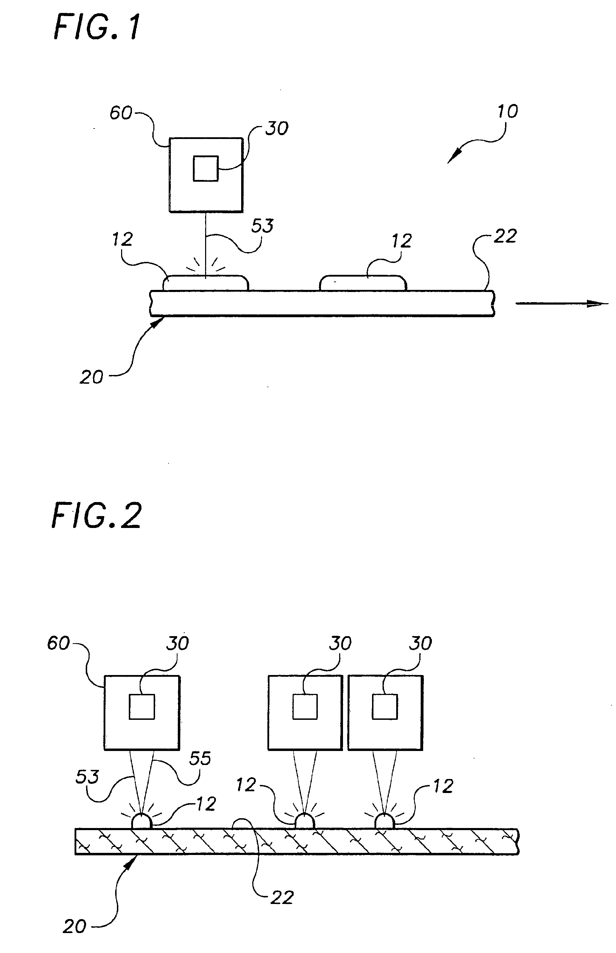

FIG. 1 is a detecting system 10 according to an exemplary embodiment of the invention suitable for detecting an object, for example a heated glue bead deposited onto an article, to determine whether the object is in or on or otherwise coincident with an intended target area.

In the exemplary application, the object is a hot melt adhesive deposited in discrete bead portions 12 along one side 22 of a moving substrate 20.

FIG. 2 illustrates an end view of an exemplary embodiment having a plurality of discrete or continuous glue beads deposited generally side by side on the moving substrate 20, for example on the flaps of corrugated packaging.

In FIG. 1, the system comprises a detector 30 disposed adjacent the article 20 and generally aligned with a corresponding target area in which the object or parameter thereof is desired to be detected. The target area is generally focused on the detector so that the object or some parameter thereof, for example variations in radiant energy, may be detected thereby.

In the exemplary application, the glue bead portions 12 are deposited onto the moving substrate 20 upstream of the detectors 30, to the left side thereof in FIG. 1, by means not illustrated but well known to those of ordinary skill in the glue bead art.

In the exemplary embodiment, the target area is along a portion of the substrate where the deposition of the discrete hot melt adhesive beads is desired. In the end view of FIG. 2, several detectors 30 are disposed opposite corresponding target areas where the deposition of glue beads 12 on the substrate is desired. The substrate in FIG. 2 moves into or out of the drawing sheet. The detector 30 thus detects the presence and/or absence of the glue bead portions 12 at the target area.

The detector 30 is generally any detector capable of detecting the desired object or some parameter thereof in the target area. In the exemplary embodiment, the detector is an electro-optic device that senses radiant energy or changes thereof emanating from the object in the target area. The object in the exemplary application is a series of heated glue beads.

Detectors capable of detecting changes in temperature are particularly suitable for detecting the discrete heated glue beads deposited onto moving substrates in the exemplary application. In one embodiment, an electro-optic detector senses variations in radiant energy emanating from discrete glue beads on a moving substrate moving past the detector.

In a preferred embodiment for the exemplary glue bead detecting application, the detector 30 is a photoconductive device, for example Model No. BX-15 available from Cal-Sensors, Inc., Santa Rosa, California, although other devices may be used alternatively.

Electro-optic detectors, including the Model No. BX-15 photoconductive device available from Cal-Sensors, Inc., change states relatively quickly, which permits detecting variations in radiant energy occurring over relatively short time periods. Thus in the exemplary application, discrete glue bead portions may be deposited onto substrates moving at relatively high speeds without evading detection. The exemplary detector, Model No. BX-15 detects temperature changes occurring over time periods as short as 2 msec.

The detection system of the present invention also has a relatively good depth of focus, which compensates for variations in the position of the target area, for example variations associated with movement of the substrate 20 toward and away from the detector 30. In the exemplary embodiment, the depth of focus compensation is approximately ± 0.25 inches, which is particularly suitable for detecting glue beads on moving substrates, which tend to move the position of the target area toward and away from the detector within this range.

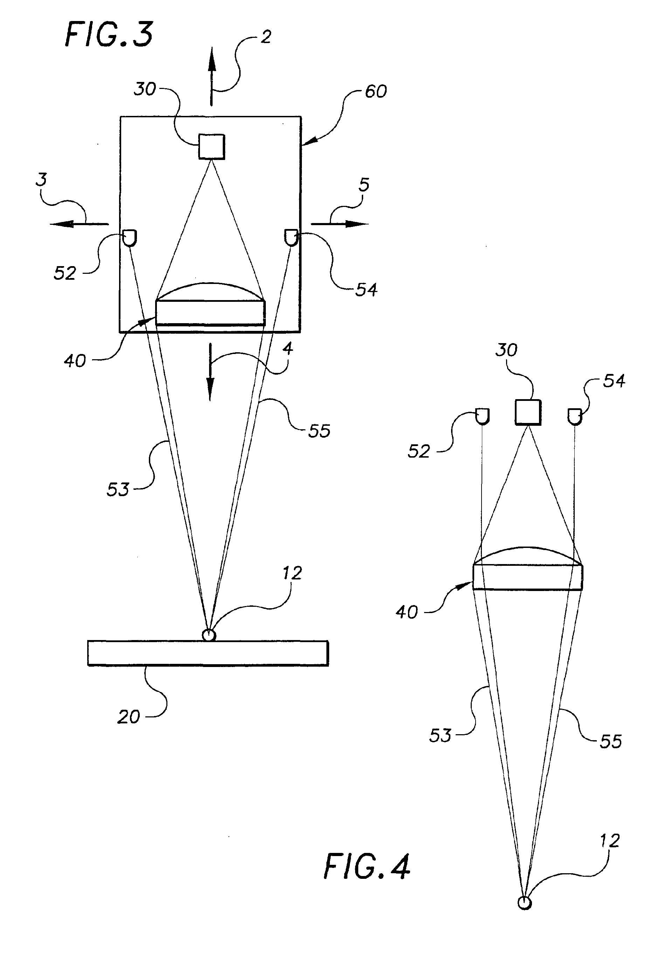

The system preferably comprises a lens disposed between the article 20 and the detector 30. In FIG. 3, the lens 40 is focused between the target area, which is coincident with the desired location of the discrete glue beads 12 on the moving substrate 20, and the detector 30. Thus configured the lens 40 focuses radiant energy from the glue bead or other object or parameter thereof in the target area onto the detector 30, for detection thereby.

The lens 40 may include a material that filters certain undesirable wavelengths of radiant energy to reduce electrical noise. The lens may for example pass only those wavelengths or a portion thereof detectable by the detector 30.

The lens 40 is preferably an optical grade material, and in one embodiment comprises zinc selenide as a filter material. In alternative embodiments, the lens may be less than optical grade, and may comprise other filtering materials besides zinc selenide, depending on the particular wavelengths to be filtered.

The system also preferably comprises a light source producing visible light having a focal point directed toward the target area, which corresponds to the location where it is desirable to detect the glue beads in the exemplary application.

The focal point of the visible light is initially adjusted, or calibrated, so that the object or parameter thereof in the target area is focused on the detector when the visible light is focused on the target area. In the exemplary heated glue bead detection application, upon calibration, the visible light facilitates and ensures proper spatial positioning or alignment of the detector relative to the target area where detection of the glue beads is desired.

Calibration may be performed by positioning the detector and lens relative to a test object in the target area until some monitored output of the detector is optimized. Thereafter, the light source is focused on the target area.

In one embodiment, the visible light includes first and second converging beams of collimated laser light that coincide at the focal point. In FIGS. 3 and 4, the light source comprises first and second laser sources 52 and 54 spaced apart from each other, wherein a first laser beam 53 emanates from the first laser source 52 and a second laser beam 55 emanates from the second laser source 54.

LED lasers having a relatively low power output on the order of 1 mW are suitable for the exemplary glue bead detecting application, for example a continuous LED collimated laser module, Model No. LQ-650 available commercially from WSTech.

In the exemplary embodiment of FIG. 3, the lasers 52 and 54, the detector 30 and lens 40 are preferably adjustably mounted on a mounting structure 60 for calibration as discussed above. Upon calibration, the mounting structure 60 itself is positionable by an end user relative to the target area 12 to focus the object or parameter thereof in the target area onto the detector by merely positioning the location of the mounting structure 60 until the focal point of the visible light is positioned on the target area.

In FIG. 3, the mounting structure 60, including the detector and light sources mounted thereon, is positionable toward and away from the target area 12 in the directions of arrows 2 and 4. The mounting structure 60 is also positionable laterally relative to the target area 12 in the directions of arrows 3 and 5. In some applications, it may also be desirable to position the mounting structure 60 into and out of the drawing page.

In FIG. 4, the first and second laser beams 53 and 55 pass through corresponding prisms of the lens. The prisms are configured to deflect the laser beams onto the desired focal point when the laser sources 52 and 54 are located where they cannot be targeted directly onto the focal point. In FIG. 4, for example, the prisms permit placement of the lasers sources 52 and 54 behind the lens 40 in a plane common with the detector 30, thereby reducing the packaging size of the mounting structure.

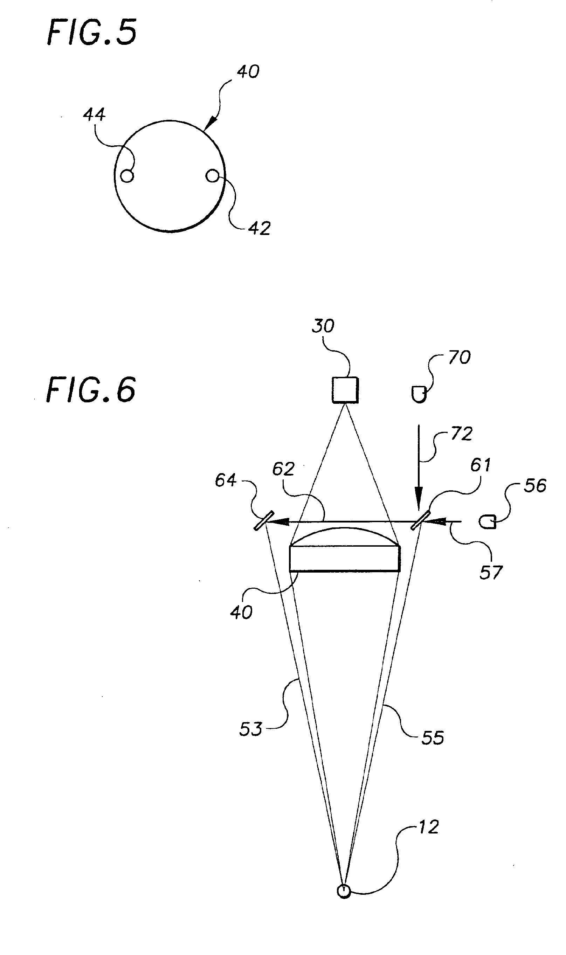

In FIG. 5, the lens 40 has prisms 42 and 44 formed thereon, for example by milling small flats at an angle on the lens, whereby the milled flats bend the light beams passing therethrough toward the desired focal point.

In FIG. 6, the first and second laser beams 53 and 55 originate from a single laser source. In one configuration, the first and second laser beams originate from a laser source 56, which produces a single laser beam 57 that passes through a beam splitter 60, which produces the laser beam 55 and another laser beam 62 that is deflected by a mirror 64 onto the desired focal point.

FIG. 6 also illustrates an alternative configuration wherein the first and second laser beams originate from a single laser source 70, which produces a single laser beam 72 that first passes through the beam splitter 60, which produces the laser beam 55 and the laser beam 62 that is deflected by the mirror 64 onto the desired focal point. In some embodiments, where the laser beam 72 originates from the source 70, it may be necessary to deflect the beam 55 with a prism placed after the beam splitter 60.

While the foregoing written description of the invention enables one of ordinary skill to make and use what is considered presently to be the best mode thereof, those of ordinary skill will understand and appreciate the existence of variations, combinations, and equivalents of the specific exemplary embodiments herein. The invention is therefore to be limited not by the exemplary embodiments herein, but by all embodiments within the scope and spirit of the appended claims.

## Claims

1. A glue detecting system comprising:
an article having glue deposited thereon;
an electro-optic detector disposed adjacent the article;
a lens disposed between the article and the electro-optic detector,
the lens positioned to focus radiant energy from the glue onto the electro-optic detector.

2. The system of Claim 1, the glue is a bead of hot melt adhesive deposited in discrete portions on the article.

3. The system of Claim 1, the lens includes a wavelength filtering material that filters undesirable wavelengths of radiant energy focused onto the detector.

4. The system of Claim 1, the lens comprises zinc selenide.

5. The system of Claim 1, a light source producing visible light having a focal point directed toward the glue, the focal point of the visible light focused on the glue when the radiant energy therefrom is focused on the detector.

6. The system of Claim 5, the visible light includes first and second converging beams of laser light that coincide at the focal point.

7. The system of Claim 6, the light source comprises first and second collimated laser sources spaced apart from each other, the first laser beam emanates from the first laser source and the second laser beam emanates from the second laser source.

8. The system of Claim 6, the first and second laser beams pass through corresponding prisms of the lens.

9. A detection system comprising:
a detector positioned adjacent a target area;
a lens between the target area and the detector;
a light source producing visible light having a focal point directed toward the target area;
the lens focuses the target area onto the detector when the focal point of the visible light is positioned on the target area.

10. The system of Claim 9, the visible light comprises first and second converging beams of laser light that coincide at the focal point.

11. The system of Claim 10, the light source comprises first and second lasers spaced apart from each other, the first laser beam emanates from the first laser and the second laser beam emanates from the second laser.

12. The system of Claim 11, the first and second laser beams pass through corresponding prisms of the lens.

13. The system of Claim 10, the light source comprises first and second laser sources spaced apart from each other and located in a common plane with the detector, the first laser beam emanates from the first laser source and the second laser beam emanates from the second laser source.

14. The system of claim 9, the target area coincides with a bead of hot melt adhesive deposited in discrete portions on an article.

15. The system of Claim 9, the lens comprises zinc selenide.

16. The system of Claim 9, the detector is an electro-optic device.

17. In a system that dispenses discrete portions of hot melt adhesive onto a moving article, the improvement comprising:
a photoconductive detector positioned proximate the moving article;
a light source producing visible light having a focal point directed toward and positionable on the discrete portions of hot melt adhesive;
a lens between the article and the photoconductive detector,
the lens focuses radiant energy from the discrete portions of hot melt adhesive onto the photoconductive detector when the focal point of the light source is positioned on the discrete portions of hot melt adhesive.

18. The improvement of Claim 17, the visible light comprises first and second converging beams of laser light that coincide at the focal point.

19. The improvement of Claim 18, the lens comprises zinc selenide.

20. The improvement of Claim 19, the first and second laser beams pass through corresponding prisms of the lens.
